# EUROPEAN PATENT SPECIFICATION

(11) **EP 2 579 753 B1**
(45) Date of publication and mention of the grant of the patent: **01.11.2017**
(21) Application number: 11791750.0
(22) Date of filing: 09.06.2011
(51) Int. Cl.: A47J 43/046, A47J 43/07, A47J 43/08, A01J 11/04

(54) **MILK FROTHER**
MILCHAUFSCHÄUMER
MOUSSEUR À LAIT

(30) Priority: 11.06.2010 AU 2010902561
(43) Date of publication of application: 17.04.2013
(73) Proprietor: Breville PTY Limited, Alexandria, NSW 2015 (AU)
(72) Inventor: THAI, Khon, Beverly Hills, NSW 2209 (AU)
(74) Representative: Marles, Alan David
(86) International application number: PCT/AU2011/000712
(87) International publication number: WO 2011/153587

(56) References cited:
- WO-A1-2009/135759
- WO-A1-2009/135759
- DE-U1-202007 007 337
- US-A- 4 162 855
- US-A- 4 209 259
- US-A1- 2007 221 068

## Description

### Background of the Invention

Milk frothers are well known. Frothed or aerated milk is used, typically, in hot beverages such as various styles of coffee and tea. Frothing is known to be accomplished by the injection of steam into a reservoir of milk or by aggressive stirring. Magnetic stirrers are also well known, examples particularly focused on agitating milk are described in DE 20 2007 007 337 and WO 2009/135759. A higher-torque magnetic stirrer is described in US 4,209,259. However, the present invention intends to provide separate improvements in various technologies associated with milk frothing including stirring disc improvements, variable temperature heating, the way that the milk is stirred and the way that the milk is contained.

The frothing disc must be retained securely while it is rotating but must be easy to remove for storage and cleaning. The frothing disc revolves around a cylindrical stub shaft. In some prior art discs, seating the frothing disc in an inverted orientation prevents the frothing disc from operating properly. Some prior art discs vibrate or oscillate in use and thus do achieve the highest potential rate of rotation.

### Objects and Summary of the Invention

It is an object of the invention to overcome at least some of the disadvantages associated with prior art frothing discs.

It is another object of the invention to provide an improved magnetic stirrer with reduced tendency to fail during the frothing process.

It is another object of the invention to provide an induction heating base.

It is another object of the invention to provide a frothing vessel with an improved lid.

Accordingly, the present invention provides a magnetic frothing disc comprising a central hub and a flange. The hub has an interior and, at one end, a base opening for receiving a shaft upon which the disc rotates. The hub also has a side wall provided with one or more flexible fingers, at least one finger having a tip comprising a bead that extends into the interior of the hub.

### Brief Description of the Drawing Figures

The invention be better understood, reference is now made to the following drawing figures, in which:
- Figure 1: is a cross section of a milk frother in accordance with the teachings of the present invention;
- Figure 2: is a cross section of a frothing vessel and a magnetic stirrer;
- Figure 3: is a cross sectional detail through a magnetic stirrer and retention hub;
- Figure 4: is a perspective view of the stirrer retainers located on the exterior of the frothing base;
- Figure 5: is a perspective view of the top of a frothing vessel, its lid and removable lid plug;
- Figure 6: is a partial cross section through a frothing base and removable jug;
- Figure 7: is a cross sectional detail of a motor, magnetic head, boss, hub and stirrer;
- Figure 8: is a perspective view of an alternative design of frothing disc;
- Figure 9: is a top plan view of the disc depicted in Figure 8;
- Figure 10: is a side elevation of the disc depicted in Figures 8 and 9;
- Figure 11: is a side elevation, cross sectioned, of the disc depicted in Figures 8-10;
- Figure 12: is a cross-sectional view of a frothing jug and disc, prior to the mounting of the disc; and
- Figure 13: is a cross sectional view of a frothing jug and disc with the disc mounted to the jug.

### Best Mode and Other Embodiments

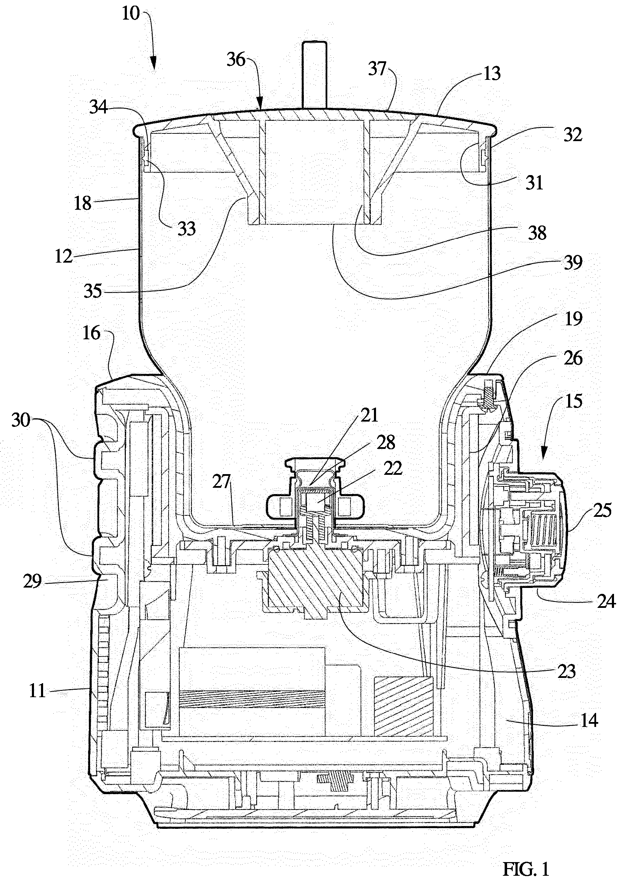

As shown in Figure 1, a milk frother 10 comprises a base 11 and a stainless steel, removable jug 12. The jug has a transparent polymeric lid 13. The base has an internal compartment 14, user activated controls 15 and, accessible from the top of the base, a polymeric saddle 16 for receiving the stainless steel jug 12.

In order to maximise or optimise the volume of the jug 12, the internal and external diameters of the jug increase from a first portion of smaller diameter 17 that is received within the saddle 16 to a larger diameter 18 that extends both out of the saddle 16 and above the uppermost surface of the base 19. A smooth transitional section 20 connects the smaller and larger diameter portions 17, 18 of the jug 12. The shape of the saddle 16 conforms to those portions of the jug that are contained within it.

The saddle further comprises a centrally located, hollow, boss 21 within which rotates a magnetic head 22 that is driven by an electric motor 23 located within the internal cavity 14. The motor 23 may be a fixed speed motor or a variable speed motor.

The user operated controls 15 comprise a rotary dial or knob 24. The rotating knob 24 further comprises a central, non-rotating push button 25. The rotating knob 24 is able to control the current delivered to an induction coil 26 that surrounds the saddle 16 and is located within the internal compartment 14. The push button 25 operates as an overall on/ off switch for the device. Rotation of the knob 24 has a setting that affects the complete cut off of current to the induction coil 26 so that the magnetic stirrer is rotated by its motor 23 without any heat being delivered to the milk in the jug via the induction coil 26. When a user set temperature is reached the current to the heater is turned off and the stirring stops.

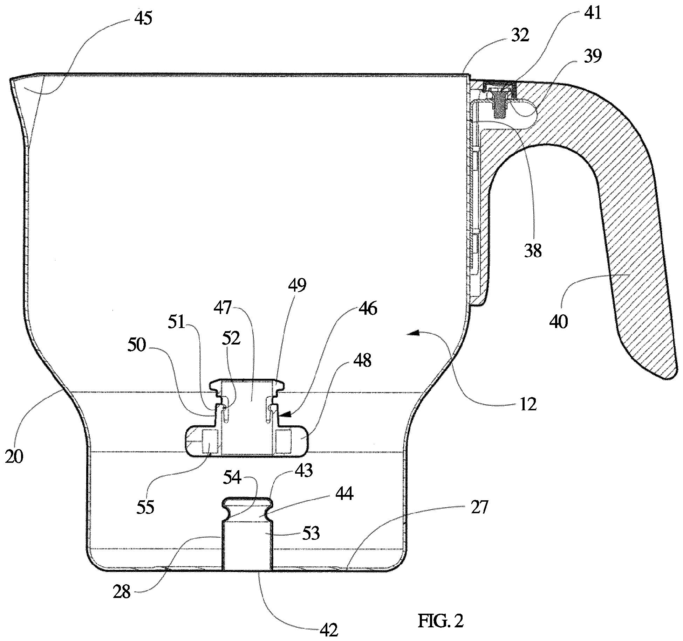

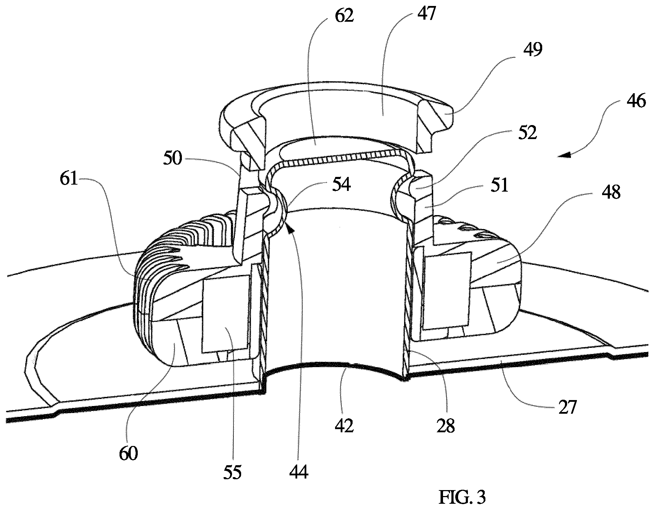

The lower surface or floor 27 of the stainless steel jug further comprises a central, hollow hub 28. The hub 28 internally receives the boss 21 that protrudes from the bottom of the saddle 16. This has the effect of locating the rotating magnetic head 22 above the floor 27 of the jug when the jug is installed. This allows a magnetic stirrer to be removably located over the hub 28 (see Figures 2 and 3).

The base has, on its exterior, a recess 29 in which is located one or more stubs 30. The diameter and configuration of the stubs 30 is similar or identical to the external measurements and configuration of the hub 28. In this way, a magnetic stirrer that is adapted to cooperate with the hollow hub 28 will also be adapted to engage with and be temporarily retained by the stubs 30 for storage purposes. The depth of the recess 29 is designed to at least partially conceal the magnetic stirrers that are retained by the stubs 30.

The metallic jug 12 is preferably provided with a transparent polymeric lid 13. The lid 13 has a circular rim 31 that descends into the open mouth 32 of the jug. The rim has a circumferential groove 33 that receives a polymeric seal 34. The polymeric seal has at least one circumferential "V" shaped bead that contacts the interior surface of the jug. The polymeric seal 34 prevents milk from escaping the jug during frothing and helps seat and retain the lid. The lid features an integral central funnel 35 through which powdered or liquid ingredients can be poured, even when the lid is in place. The funnel 35 receives a separate, transparent, polymeric plug 36. The plug 36 comprises a generally circular cap 37 and an integral open ended, cylindrical body 38 having, when installed, a downward facing open mouth 39. In this way, the body 38 can be used as a calibrated or uncalibrated measuring tool for the additions of powders or liquids to the contents of the jug.

As shown in Figure 2 the metallic, preferably stainless steel jug 12 further comprises an external tang 38 and cantilever lever 39 that are used to retain an external handle 40. A screw fastener 41 is used to attach the handle 40 to the cantilever 39. The lower surface or floor 27 of the jug includes a centrally located and hollow hub 28. The interior of the hub 28 is accessible through an opening 40 formed on the underside surface of the jug. The hollow hub 28 is thus only accessible from the bottom surface. The hub 28 further comprises a rounded, upper, circumferential edge 43 and just below it or adjacent to it, a circumferential groove 44. In preferred embodiments, the jug further comprises a pouring spout or beak 45 that is integral with the jug.

The construction of the magnetic stirrer 46 is explained with reference to Figures 2 and 3. The stirrer is seen as comprising a moulded body having a central through bore 47. The bore 47 is sized to fit over the hub 28. The body further comprises a circumferential working flange 48, preferably located at a lower extremity of the stirrer. The stirrer further comprises a grip ring 49 located at an opposite end of the stirrer from the working flange 48. A neck 50 extends between the working flange 48 and the grip ring 49. The neck 50 further comprises one or more resilient fingers 51, each preferably terminating in an inwardly facing bead 52. In a relaxed or uninstalled position, the effective internal diameter defined by the inwardly facing bead 52 is smaller than the diameter of the body 53 of the hub 28 but larger than the diameter of the most necked portion 54 (smallest outside diameter) of the circumferential groove 44. In this embodiment the circumferential groove 44 is disclosed as having a concave "C" shaped cross section. It will be appreciated that other cross sections may be used. Because the fingers 51 are resilient, the fingers will flex as they pass over the rounded edge 43 of the hub, then seat within the groove 44 so that the bead or beads 52 locate themselves in the groove 44. Because the fingers are resilient, the stirrer is easily inserted and removed from the hub with only finger pressure. The clearance between the stirrer and the hub allows the hub to rotate freely under the influence of the rotating magnetic head 22. In preferred embodiments, the working flange is sized to have moulded within it one or more magnets 55 that magnetically couple with the magnetic head 22. The external shape of the working flange 48 depends on the extent and the aggressiveness of the stirring action that the stirrer is intended to accomplish.

As illustrated in Figure 3, the working flange 48 extends beyond the diameter of the neck 50 and comprises an array of ribs and slots 60, 61 that serve to entrain air in the milk being frothed. This style of magnetic stirrer is ideal for more heavily frothed drinks such as cappuccino. In this embodiment, as illustrated in Figure 3, the magnetic stirrer 46, when installed, sits slightly above the floor 27 of the jug and extends above the upper surface 62 of the hollow hub 28.

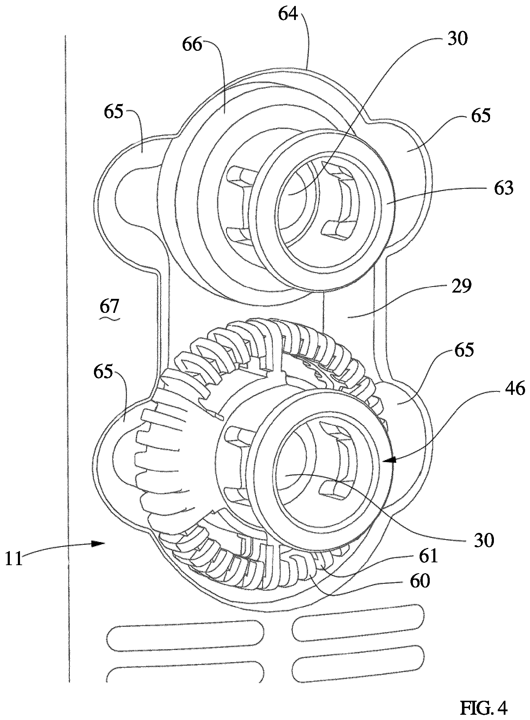

With reference to Figure 4 (and Figure 1) it can be seen that the exterior of the frother's base has a recess 29 that is adapted to house one or more magnetic stirrers 46, 63. The recess 29 comprises an oval shaped portion 64 and, extending from it, two pairs of lateral finger recesses 65. In this example, the pairs of fingers recesses 65 are provided one pair above the other. The stubs 30 are located vertically, one above the other. Each stub 30 is adapted to hold one stirrer.

Figure 4 also suggests a second embodiment of a stirrer 63. This second type of stirrer is characterised by a smooth working flange 66 that lacks the array of ribs and slots 60, 61 formed on the other stirrer 46. In this example, the overall diameter of the working flange 66 is preferably smaller than the affective diameter of the other working flange 48. This type of stirrer will stir a liquid effectively but does not entrain as much air in the liquid as the other type of stirrer. When the stirrers are installed on the stubs 30, the grip ring 63 sits above the outermost surface 67 of the base 11.

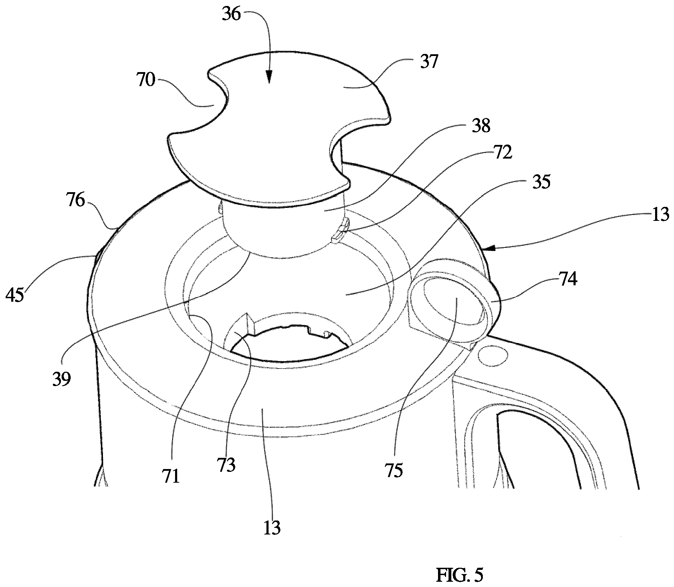

As shown in Figure 5, the cap 36 maybe provided with one or more scallops or recesses 70 so that a user's finger may be inserted between the plug 36 and the inner diameter 71 of the top 13. As suggested by Figures 1 and 5, the cap 36 is intended to sit within the funnel 35 so that the top of the plug 36 is flush with the top of the lid 13. Figure 5 also illustrates that a lower rim of the cylindrical body 38 is provided with male bayonet-like fixtures 72 adapted to be inserted into and cooperate with cooperating female bayonet features 73 moulded into a lower extent of the funnel 35. In preferred embodiments, an upper surface of the lid is provided with an integral, upright grip ring 74 having a finger sized opening 75 passing through it. In preferred embodiments, the grip ring 74 is located both adjacent to and extending slightly beyond the outside diameter 76 of the lid 13.

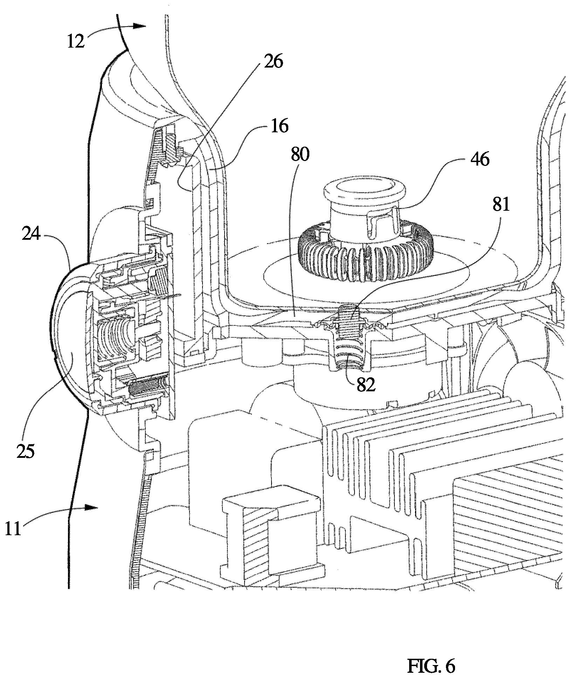

As shown in Figure 6, a lowermost surface 80 or floor of the saddle 16 further comprises an opening through which protrudes a temperature measuring device such as a thermistor 81. The thermistor is biased toward the jug 12 by a spring 82 so as to make optimum contact with the under surface of the jug. The thermistor 81 cooperates with a micro-processor and the user operated control knob 24 to switch or regulate the current delivered to the induction coil 26 for the purpose of increasing the temperature of the contents of the jug. In preferred embodiments the microprocessor responds to the temperature measurement represented by the output of the thermistor by cutting power to the induction coil at an appropriate time to obtain the correct temperature. In preferred embodiments, the processor applies full current of about 500W to the induction coil regardless of what temperature is selected by the user on the dial e.g. a potentiometer. In some embodiments, the microprocessor's integrated circuitry can determine either a cut off temperature or how much more time is required at full current based on a pre-determined time or temperature interval to reach the target temperature. The pre-determined time can be derived from an algorithm or found in a look up table. In preferred embodiments, the user operated knob or potentiometer has a "cold stir" setting that causes the microprocessor to only apply current to the motor that drives the magnetic head. In this setting, no power is applied to the induction coil or jug and the contents are not heated. The intent of this mode is to work foamed milk to avoid the skin that may develop after the milk cools. Another purpose of this mode is to mix cold milk with powered or liquid ingredients for making cold beverages. In preferred embodiments, the jug has a maximum capacity of about 750ml and a minimum capacity of about 250ml. A typical temperature range for the frother is from about 45 to about 75 centigrade.

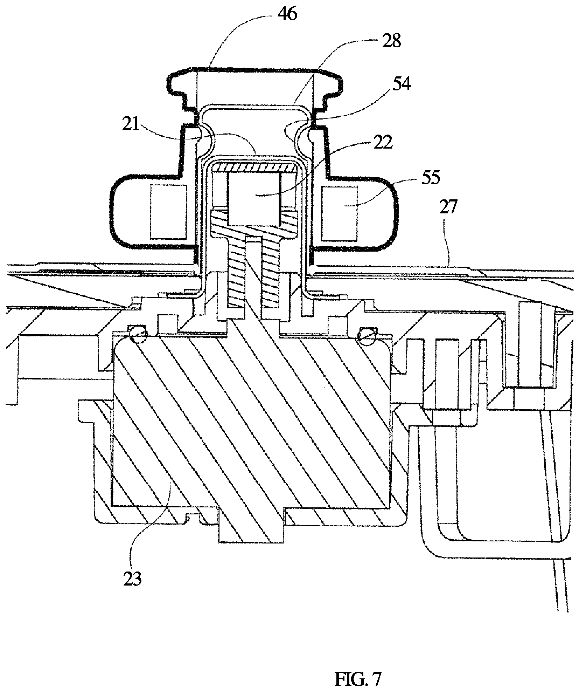

As shown in the cross sectional detail of Figure 7, the frothing stirrer 46 and its magnets 55 are retained by the hub 28. The hub 28 is connected to the floor of the jug 27. The boss 21 is shown as fitting within the hollow hub 28. The boss is affixed to the base 14 and allows the rotating magnetic head 22 to spin within it.

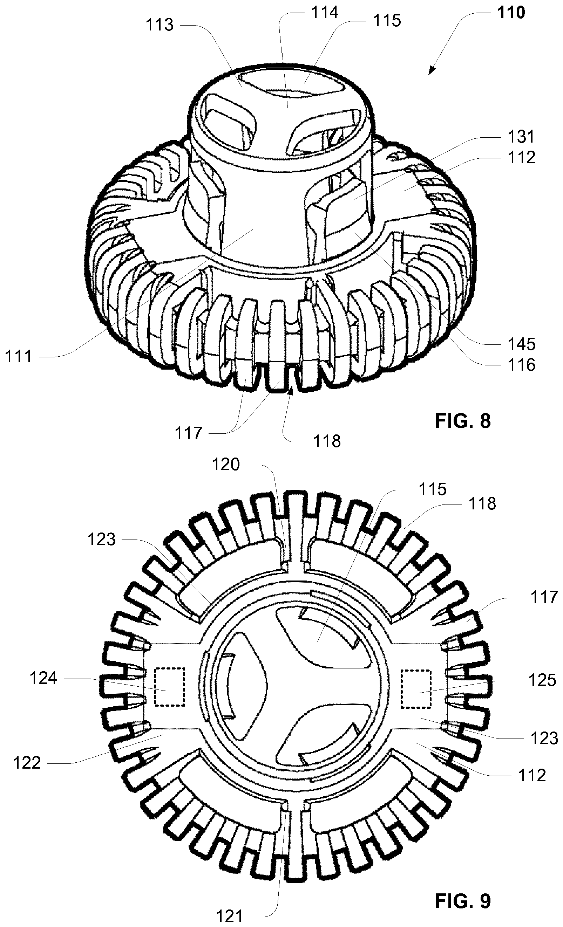

As shown in Figure 8, a second embodiment of a frothing disc 110 comprises a central hub 111 and a flange 112. The flange may be integral with or attached to the hub 111. The hub has at one end, a base opening 140 for receiving the spindle or stub shaft upon which the disc 110 rotates. The opposite end 113 of the hub is at least partially closed so that the spindle or shaft may not enter or protrude past this end of the hub. In this example, the obstruction 114 that blocks the top end of the hub comprises "Y" shaped web that is integral with the hub. Regularly spaced through openings 115 facilitate cleaning. In this example, the outer rim116 of the flange 112 comprises a circular array of fins 117 with gaps 118 there between. The fin and gap arrangement promotes the entraining of air as the disc 110 spins. Other rim styles are anticipated, depending on the stirring or frothing requirements.

As shown in Figure 9, the flange 112 in this example, comprises two narrow spokes 120,121 and two wider spokes 122, 123. The spokes interconnect the inner perimeter of the flange123 to the rim of the flange 116. Moulded within each of the wider spokes 122,123 are magnets 124, 125.

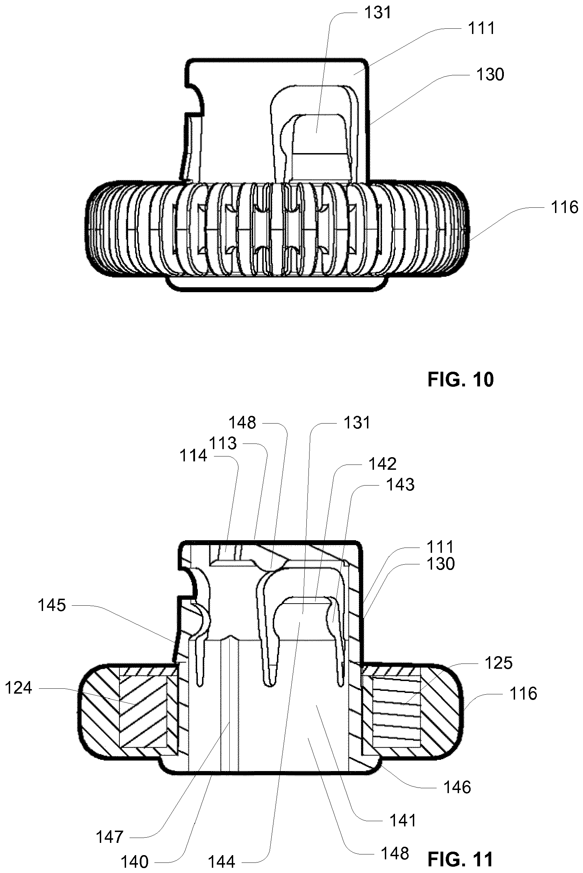

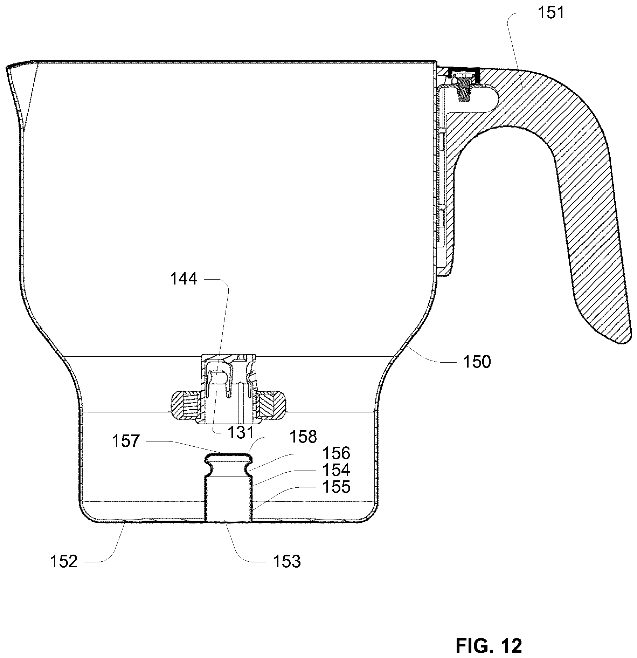

As shown in Figures 8-11, the hub 111 maybe moulded separately and snap fit to the flange 116. To facilitate this, the cylindrical side wall130 of the hub 111 is provided with one or more flexible fingers 131. In this example, three fingers are provided, equally spaced, about the perimeter of the side wall 130. Each finger flexes from a point 141 just below the vertical mid point of the hub and extends to a tip 142 that is approximately one third from the base opening 140 of the hub to the closed end 113. It has been observed that three fingers provide more stable rotational characteristics than either two or four fingers 131. The free tip of each finger 143 has a horizontal rib or bead 144 that extends into the interior of the hub. This bead 144 engages a co-operating groove formed on the stub shaft that is located on the floor of the frothing jug (see Figure 12). As better shown in Figure 8, each finger 131 also comprises an outer ramp or tooth 145 that is used during the final assembly of the disc 110. During assembly, the flange is pressed over the hub from the direction of the closed end 114. The internal diameter of the flange rise over the ramp145 and seats below the ramp 145 as shown in Figures 8 and 11. In this way, the flange is retained between the teeth 145 and a circumferential shoulder 146 located around the periphery of the base opening 140. Figure 11 also illustrates the presence of the preferably three or more vertical ribs 147 that are equally spaced about the interior bore 148 of the hub 111. The inner most preferably rounded tip of each vertical rib 147 pilots and centres the rotating disc against the outer surface of the stub shaft, thus reducing friction between the disc 110 and the stub shaft. Similarly, a centrally located mound or bump extends from the interior of the terminal closure web 114. The rounded inner-most tip of the mound148 acts as the point of contact for the closed end, thus limiting the amount of surface contact between the closed end and the upper surface of the stub shaft. Together, the mound148 and the vertical ribs 147 reduce the frictional resistance to rotation while providing stable contact points for the rapidly rotating disc.

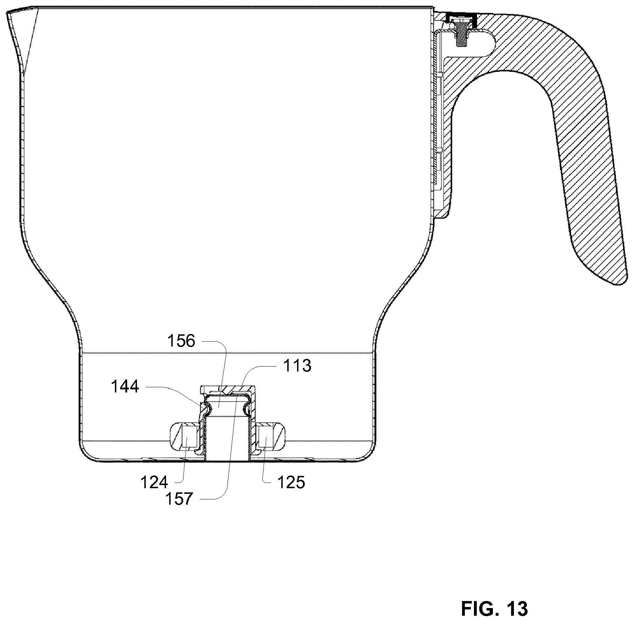

As shown in Figure 12, the frothing jug 150 comprises a vessel with a handle 151. The floor 152 of the vessel features a central opening 153 that is adapted to receive a male component of the vessel's base. The male component contains rotating magnets that act on the disc 110. The opening 153 leads into an integral stub shaft 154 about which the disc rotates. The stub shaft 154 preferably has cylindrical side wall 155 and a circumferential groove 156 adjacent to the closed top end 157 of the stub shaft. The upper corner 158 of the stub shaft is preferably rounded. Accordingly, as suggested by Figures 12-13, the disc is inserted over the stub shaft and is easily removed without any need for separate fasteners. The inner ribs 144 of each finger are shown in Figure 6 as being engaged with the circumferential groove 156. Figure 13 illustrates the small gap between the upper surface157 of the stub shaft and the lower surface or underside of the closed end 113.

If made in accordance with the above teachings, a disc is easily inserted and easily removed, does not come off the stub shaft during rotation and rotates smoothly and stably without excessive wobble or vibrations.

While the present invention has been disclosed with reference to particular details of construction, these should be understood as having been provided by way of example and not as limitations to the scope of the invention, which is defined by the claims.

## Claims

1. A magnetic frothing disc (46, 63, 110) comprising:
a central hub (49, 50; 111) and a flange (48, 66, 112);
the hub having an interior, a side wall (50, 130) and, at one end, a base opening (42, 140) for receiving a shaft (28, 154) upon which the disc rotates, **characterised in that** the side wall (50, 13) is provided with one or more flexible fingers (51, 131); at least one finger (51, 131) having a tip (142) comprising a bead (52, 144) that extends into the interior of the hub.

2. The disc (46, 110) of claim 1, wherein:
an outer rim of the flange (48, 112) comprises an array of fins (60, 117) with gaps (61, 118) therebetween.

3. The disc of either of claims 1 or 2, wherein:
one or more spokes (122, 123) attach to the rim of the flange and at least one magnet (55, 124, 125) is located within a spoke.

4. The disc of any one of claims 1-3, wherein:
the hub (49, 50; 111) is moulded separately and then attached to the flange (48, 66, 112).

5. The disc of any one of claims 1-4, wherein:
each of the at least one fingers (131) further comprises an outer ramp (145) that is used during an assembly of the disc, the flange (112) adapted to be pressed over the hub.

6. The disc of claim 5, wherein:
an internal diameter of the flange (112) is adapted, during an assembly, to rise over the ramp (145) and seat below the ramp;
the flange (112) being retained between the ramp (145) and a circumferential feature (146) located around a periphery of the base opening (140).

7. The disc of any one of claims 1-6, wherein:
there are only three fingers (51, 131) equally spaced about the hub (49, 50; 111).

8. The disc of any one of claims 1-7, comprising:
three or more vertical ribs (147) spaced about an interior bore (47, 148) of the hub (49, 50; 111).

9. The disc (110) of claim 8, wherein:
each vertical rib (147) has a tip that centres the disc (110) when it is rotating.

10. The disc of any one of claims 1-9, wherein:
an opposite end (113) of the hub comprises an obstruction (114) that prevents the disc from being installed in an inverted orientation.

## Patentansprüche

1. Ein magnetisches Rührwerk (46, 63, 110) umfassend:
eine zentrale Drehscheibe (49, 50, 111) und einen Flansch (48, 66, 112);
wobei die Drehscheibe Folgendes umfasst: einen Innenraum, eine Seitenwand (50, 130) und, an einem Ende, eine Bodenöffnung (42, 140) zur Aufnahme einer Welle (28, 154), auf der sich das Rührwerk dreht, **dadurch gekennzeichnet, dass** die Seitenwand (20, 13) mit einem oder mehreren flexiblen Fingern (51, 131) versehen ist; mindestens ein Finger (51, 131) weist eine Spitze (142) mit einer Wulst (52, 144) auf, die sich in den Innenraum der Drehscheibe hinein erstreckt.

2. Rührwerk (46, 110) nach Anspruch 1, wobei:
ein äußerer Rand des Flansches (48, 112) eine Gruppe von Rippen (60, 117) mit Spalten (61, 118) dazwischen umfasst.

3. Rührwerk nach einem der Ansprüche 1 oder 2, wobei:
eine oder mehrere Speichen (122, 123) mit dem Rand des Flansches verbunden sind und mindestens ein Magnet (55, 124, 125) sich innerhalb einer Speiche befindet.

4. Rührwerk nach einem der Ansprüche 1 bis 3, wobei:
die Drehscheibe (49, 50, 111) getrennt geformt und danach am Flansch (48, 66, 112) angebracht worden ist.

5. Rührwerk nach einem der Ansprüche 1 bis 4, wobei:
jeder der mindestens einen Finger (131) ferner eine äußere Schräge (145) umfasst, die während einer Montage des Rührwerks (112) verwendet wird, und der Flansch so ausgelegt ist, dass er über die Drehscheibe gedrückt wird.

6. Rührwerk nach Anspruch 5, wobei:
ein innerer Durchmesser des Flansches (112) so ausgelegt ist, dass er, während einer Montage, sich über die Schräge (145) erhebt und unterhalb der Schräge liegt;
der Flansch (112) wird zwischen der Schräge (145) und einer in Umfangsrichtung angeordneten Struktur (146), die sich um einen Umfang der Bodenöffnung (140) herum befindet, gehalten.

7. Rührwerk nach einem der Ansprüche 1 bis 6, wobei:
es nur drei Finger (51, 131) gibt, die gleichmäßig von der Drehscheibe (49, 50, 111) beabstandet angeordnet sind.

8. Rührwerk nach einem der Ansprüche 1 bis 7, umfassend:
drei oder mehr vertikale Rippen (147), die um eine Innenbohrung (47, 148) der Drehscheibe beanstandet angeordnet sind.

9. Rührwerk (110) nach Anspruch 8, wobei:
jede vertikale Rippe (147) eine Spitze hat, die das Rührwerk (110) zentriert, wenn es sich dreht.

10. Rührwerk nach einem der Ansprüche 1 bis 9, wobei:
ein gegenüberliegendes Ende (113) der Drehscheibe ein Hindernis (114) aufweist, das verhindert, dass das Rührwerk in einer umgekehrten Richtung montiert wird.

## Revendications

1. Disque de moussage magnétique (46, 63, 110) comprenant :
un moyeu central (49, 50 ; 111) et une collerette (48, 66, 112) ;
le moyeu comportant une partie intérieure, une paroi latérale (50, 130) et à une extrémité, une ouverture de base (42, 140) destinée à recevoir un arbre (28, 154) sur lequel tourne le disque, **caractérisé en ce que** la paroi latérale (50, 13) est pourvue d'un ou de plusieurs doigt(s) flexible(s) (51, 131) ; au moins un doigt (51, 131) comportant un bout (142) comprenant un bourrelet (52, 144) qui s'étend à l'intérieur du moyeu.

2. Disque (46, 110) selon la revendication 1, dans lequel :
un rebord extérieur de la collerette (48, 112) comprend un ensemble d'ailettes (60, 117) avec des espaces (61, 118) entre elles.

3. Disque selon l'une ou l'autre des revendications 1 et 2, dans lequel :
un ou plusieurs rayon(s) (122, 123) est ou sont solidaire(s) du rebord de la collerette et au moins un aimant (55, 124, 125) est placé à l'intérieur d'un rayon.

4. Disque selon l'une quelconque des revendications 1 à 3, dans lequel :
le moyeu (49, 50 ; 111) est moulé séparément, puis fixé à la collerette (48, 66, 112).

5. Disque selon l'une quelconque des revendications 1 à 4, dans lequel :
le(s) doigt(s) (131) comprend ou comprennent en outre chacun une rampe extérieure (145) qui est utilisée au cours d'un assemblage du disque, la collerette (112) étant conçue pour être pressée sur le moyeu.

6. Disque selon la revendication 5, dans lequel :
un diamètre interne de la collerette (112) est conçu pour s'élever, au cours d'un assemblage, au-dessus de la rampe (145) et se mettre en place au-dessous de la rampe ;
la collerette (112) étant retenue entre la rampe (145) et un élément circonférentiel (146) placé autour d'une périphérie de l'ouverture de base (140).

7. Disque selon l'une quelconque des revendications 1 à 6, dans lequel :
il n'existe que trois doigts (51, 131) équidistants autour du moyeu (49, 50 ; 111).

8. Disque selon l'une quelconque des revendications 1 à 7, comprenant :
trois nervures verticales (147) ou davantage, espacées autour d'un alésage intérieur (47, 148) du moyeu (49, 50 ; 111).

9. Disque (110) selon la revendication 8, dans lequel :
chaque nervure verticale (147) présente un sommet qui centre le disque (110) lorsqu'il est en rotation.

10. Disque selon l'une quelconque des revendications 1 à 9, dans lequel :
une extrémité opposée (113) du moyeu comprend un obstacle (114) qui empêche d'installer le disque dans une orientation inversée.
